# EUROPÄISCHE PATENTANMELDUNG

(11) **EP 1 111 020 A2**
(43) Veröffentlichungstag der Anmeldung: **27.06.2001**
(21) Anmeldenummer: 00127304.4
(22) Anmeldetag: 13.12.2000
(51) Int. Cl.: C09J 5/00, C09J 5/06, C09J 11/04, C09J 11/06

(54) **Lösbare Klebeverbindungen**

(30) Priorität: 22.12.1999 DE 19961940
(71) Anmelder: Henkel Kommanditgesellschaft auf Aktien, 40589 Düsseldorf (DE)
(72) Erfinder: Friese, Carsten, 40219 Düsseldorf (DE); Unger, Lothar, 46049 Oberhausen (DE); Kirsten, Christian, 40789 Monheim (DE); Huver, Thomas, 40625 Düsseldorf (DE); Ferencz, Andreas, 40223 Düsseldorf (DE)

(57) **Zusammenfassung**

Der Zusatz von thermisch aktivierbaren Substanzen aus der Gruppe von Dicarbonsäuren, Azoverbindungen, Carbonaten, kristallwasserhaltigen Substanzen sowie Polyalkoholen zu handelsüblichen Klebstoffen ermöglicht eine thermische Spaltung der Klebeverbindung. Hierdurch kann eine Verklebung durch Wärme wieder leicht gelöst werden, was ein Recycling der verklebten Bauteile erleichtert.

## Beschreibung

Die vorliegende Erfindung betrifft Klebstoffzusammensetzungen, deren Bindemittelsystem thermisch aktivierbare Substanzen enthält. Ein weiterer Gegenstand der vorliegenden Erfindung sind lösbare Klebeverbindungen sowie ein Verfahren zum Lösen von Klebeverbindungen.

In vielen Industriezweigen, insbesondere in der metallverarbeitenden Industrie wie z.B. der Fahrzeugindustrie, im Nutzfahrzeugbau sowie deren Zulieferindustrien oder auch bei der Herstellung von Maschinen und Haushaltsgeräten oder auch in der Bauindustrie werden zunehmend gleiche oder verschiedene metallische und nicht-metallische Substrate klebend bzw. abdichtend miteinander verbunden. Diese Art des Fügens von Bauteilen ersetzt in zunehmenden Maße die klassischen Fügeverfahren wie Nieten, Schrauben oder Schweißen, weil das Kleben/Abdichten eine Vielzahl von technologischen Vorteilen bietet. Im Gegensatz zu den traditionellen Fügeverfahren wie Schweißen, Nieten, Schrauben ist das Lösen und Separieren von geklebten Bauteilen bisher noch nicht befriedigend gelöst.

Die EP-A-735121 beschreibt einen Klebfolien-Abschnitt für eine rückstandsfreie und beschädigungslose und wieder lösbare Verklebung bestehend aus einer doppelseitig klebenden Klebefolie mit einem aus der Klebefolie herausragenden Anfasser, an dem durch Ziehen in Richtung der Verklebungsebene die Verklebung lösbar ist. Dieses Verfahren ist jedoch nur anwendbar, wenn die Klebstoffschicht der Klebefolie ein Haftklebstoff ist. Mit derartigen Klebeverbindungen lassen sich jedoch nur geringe Zug- bzw. Schälfestigkeiten erreichen, so daß dieses Verfahren nur zum Fixieren von kleinen Gegenständen wie Haken und dergleichen im Haushaltsbereich anwendbar ist.

Die DE-A-4230116 beschreibt eine Klebstoffzusammensetzung enthaltend eine Abmischung eines aliphatischen Polyols mit einem aromatischen Dianhydrid.

Diese Klebstoffzusammensetzung ermöglicht ein Auflösen der Verklebung in wäßrig alkalischen Systemen, konkret genannt werden Sodalösungen oder Alkalilaugen. Es wird vorgeschlagen diese wäßrig alkalisch löslichen Klebstoffe zur rationellen Herstellung von Magnetteilen und anderen Kleinteilen zu verwenden, wobei der Klebstoff nur zur Herstellung von Hilfsklebungen bei der Materialbearbeitung verwendet werden soll. Sehr ähnliche Klebstoffe sind auch als Etikettierklebstoffe bekannt, die ein Ablösen der Etiketten im wäßrigen oder wäßrig alkalischen Milieu bei Getränkeflaschen und ähnlichen Gebinden erlauben.

Die DE-A-4328108 beschreibt einen Kleber für Bodenbeläge und ein Verfahren zum Lösen dieser verklebten Bodenbeläge mit Hilfe von Mikrowellenenergie. Dazu soll der Kleber elektrisch leitfähig sein und durch ein Mikrowellengerät erweichbar sein. Konkret vorgeschlagen werden lösungsmittelfreie Kontaktkleber auf Basis von (wäßrigen) Polymerdispersionen, die Kupferpulver oder Aluminiumpulver enthalten. Gemäß der Lehre dieser Schrift sollen die verklebten Bodenbelagsstücke zum Lösen der Klebeverbindung in ein Mikrowellengerät gelegt werden, damit die Klebeschicht erweicht werden kann, so daß man die Bodenbelagsstücke nach dem Erweichen der Kleberschicht manuell abziehen kann.

Die WO 94/12582 beschreibt einen Haftkleber auf der Basis einer Mischung aus einer wäßrigen Polymerdispersion und einem in einem organischen Lösungsmittel gelösten Klebstoff sowie Klebrigmachern und Verdickungsmitteln. Dieser Haftklebstoff hat in einem breiten Temperaturbereich eine konstante Klebkraft und ermöglicht das mechanische Trennen der Klebeverbindungen. Angegeben wird, daß sich diese Klebeverbindungen zum Verkleben von Dämm- und/oder Zierflächenteilen wie z.B. Dämm-Materialien oder Kunststoff-Folien eignet.

Die DE-A-19526351 beschreibt ein Lösegel für Lacke, Farben und Kleber auf der Basis organischer Lösungsmittel unter Zusatz von Netz- Verdickungs- und anderen üblichen Mitteln. Als konkretes Anwendungsfeld werden die Verwendung als Abbeizmittel bei der Entschichtung von 2 K-Lacken genannt. Obwohl erwähnt wird, daß derartige Mischungen auch zum Einsatz bei 2 K-Klebern geeignet sei, fehlen jedwede konkreten Angaben zum Lösen derartiger Klebeverbindungen. In ähnlicher Weise beschreibt die WO 87/01724 eine Zusammensetzung zur Entfernung von ausgehärteten Polysulfiddichtstoffen oder Beschichtungen. Hierbei werden in einem Lösungsmittel oder Lösungsmittelgemisch bestehend aus Dimethylformamid oder Dimethylacetamid oder deren Mischung mit aromatischen Lösungsmitteln wie Toluol oder Xylol ein Alkalimetall- oder Amoniumthiolat auf der Basis von Alkyl- oder Phenylthiolaten gelöst und auf ausgehärtete Polysulfiddichtstoffe oder Beschichtungsmaterialien aufgetragen, um diese anschließend von ihren Substraten, wie z. B. Flugzeugtanks entfernen zu können. Angaben zum Lösen von Klebeverbindungen werden nicht gemacht.

In der Arbeit "Reversible Crosslinking in Epoxy Resins", Journal of Applied Polymer Science, 39, 1439 bis 1457 (1990) beschreiben V.R. Sastri und G.C. Tesoro Epoxyharze mit verschiedenen Epoxyäquivalenten, die mit 4,4'-Dithioanilin vernetzt sind. Dort wird vorgeschlagen, das vernetzte Harz zu 600 um großen Teilchen zu malen. Dieses feingemahlene Pulver wird dann in einer Lösung aus Diglyme, Salzsäure und Tributylphosphin unter Rückfluß gekocht, bis das gemahlene Harz aufgelöst ist. Analoge Offenbarungen werden in der US-A-4,882,399 von den gleichen Autoren gemacht. Konkrete Angaben über lösbare Klebeverbindungen fehlen in beiden Dokumenten.

Die WO 99/07774 beschreibt Klebstoffe, bei denen zumindest eine Aufbaukomponente Di- oder Polysulfidbindungen enthält und die nach dem Aushärten durch Auftragen von Lösungen von Spaltungsagenzien auf der Basis von Mercaptoverbindungen wieder gelöst werden können. Dadurch wird es möglich, verklebte Bauteile auf chemischem Wege in der Klebfuge wieder zu trennen. Gemäß der Lehre dieser Schrift kann das Spaltungsagenz auch in einer bei Raumtemperatur inerten Form der Klebstoff-Formulierung zugemischt werden, wobei die Spaltung nach Aktivierung des Reagenzes bei erhöhter Temperatur erfolgen kann. Konkrete Ausbildungen dieser inerten Form des Spaltungsagenzes werden nicht genannt. Obwohl die Verwendung von lösungsmittelhaltigen Spaltungsagenzien es erlaubt, Klebeverbindungen wieder zu lösen, ist es wünschenswert, auf lösungsmittelhaltige Spaltungsagenzien verzichten zu können, da diese Vorgehensweise
* wegen der diffusionsbedingten Einwirkungszeit der Spaltungsagenzien sehr zeitraubend ist
* die Handhabung von lösungsmittelhaltigen Spaltungsagenzien aus Umweltschutzgründen vermieden werden sollte.

Die DE-A-35 01 490 beschreibt eine in den Rahmen einer Autokarosserie eingeklebte Glasscheibe unter Verwendung eines elastomeren vernetzten Klebers. Diese Scheibe hat auf ihrer Oberfläche im Klebebereich einen mit Stromanschlüssen versehenen Leitstreifen, der auf seiner dem Kleber zugewandten Seite eine Trennschicht aus einem thermisch schmelzbaren Material wie Weichlot oder Thermoplast trägt. Zum Lösen der Klebeverbindung wird der Leitstreifen unter Strom gesetzt, er erwärmt sich, die Trennschicht schmilzt und die Scheibe läßt sich von der Karosserie lösen.

Die EP-A-0521825 beschreibt eine lösbare Klebeverbindung, bei welche die miteinander verbundenen Teile mittels einer dazwischen eingebrachten Kleberaupe gefügt sind. Diese Kleberaupe enthält ein flächiges thermoplastisches Trennelement. Dieses thermoplastische Trennelement enthält intrinsisch leitfähige Polymere, elektrisch leitfähige Ruße, Graphit, Metallpulver, Metallfasern oder Metallnadeln, metallbeschichtete Füllstoffe, metallbeschichtete Mikroglaskugeln, metallbeschichtete Textilfasern oder Gemische dieser Materialien. Beim Erwärmen der Klebeverbindung durch Strom oder Strahlungszufuhr wird diese thermoplastische Trennschicht erweicht, so daß die miteinander verbundenen Anteile mechanisch voneinander getrennt werden können. Konkret schlägt die EP-A-521825 vor, derartige lösbare Klebeverbindungen bei der Direktverglasung im Fahrzeugbau einzusetzen.

Die noch unveröffentlichte DE-19924138.4 beschreibt Klebstoffzusammensetzungen, die im Bindemittelsystem nanoskalige Teilchen mit ferromagnetischen, ferrimagnetischen, superparamagnetischen oder piezoelektrischen Eigenschaften enthalten. Unter Einwirkung elektromagnetischer Strahlung lassen sich derartige Klebstoffverbindungen so hoch erwärmen, daß die Bindemittelmatrix erweicht bzw. zersetzt wird und dadurch eine gefügte Klebeverbindung lösbar wird. Zur Durchführung derartiger Verfahren sind jedoch entsprechende Generatoren für die elektromagnetische Strahlung notwendig. Im übrigen gestaltet es sich schwierig, bei rein metallischen, großvolumigen Teilen die elektromagnetische Energie gezielt auf den Klebeverbund einwirken zu lassen.

Angesichts dieses Standes der Technik haben sich die Erfinder die Aufgabe gestellt, Klebstoffe bereitzustellen, die ein möglichst effizientes Lösen von Klebeverbindungen ermöglichen sollten. Dabei sollen die entsprechenden verklebten Substrate durch Erwärmen leicht entklebt werden können.

Die Lösung der Aufgabe ist den Patentansprüchen zu entnehmen. Sie beruht im Wesentlichen in der Bereitstellung von Klebstoff-Zusammensetzungen, deren Bindemittel thermisch aktivierbare Substanzen enthalten, die ein Entkleben bewirken sollen.

Ein weiterer Gegenstand der vorliegenden Erfindung ist ein Verfahren zum Entkleben von Klebeverbindungen durch Erwärmen der verklebten Bindemittelmatrix zum Aktivieren der in der Bindemittelmatrix eindispergierten Spaltsubstanzen.

Ein weiterer Gegenstand der vorliegenden Erfindung sind Bauteile, die mit Klebstoffen gefügt wurden, die sich mittels thermisch aktivierbarer Substanzen wieder entkleben lassen.

Als Bindemittelmatrix für die erfindungsgemäßen Klebstoffe können im Prinzip alle für Klebstoffe geeignete Polymere eingesetzt werden. Beispielhaft erwähnt seien für die thermoplastisch erweichbaren Klebstoffe die Schmelzklebstoffe auf der Basis von Ethylen-Vinylacetatcopolymeren, Polybutene, Styrol-Isopren-Styrol bzw. Styrol-Butadien-Styrolcopolymere, thermoplastische Elastomere, amorphe Polyolefine, lineare, thermoplastische Polyurethane, Copolyester, Polyamidharze, Polyamid/EVA-Copolymere, Polyaminoamide auf Basis von Dimerfettsäuren, Polyesteramide oder Polyetheramide. Weiterhin eignen sich prinzipiell die bekannten Reaktionsklebstoffe auf der Basis ein- bzw. zweikomponentiger Polyurethane, ein- oder zweikomponentiger Polyepoxide, Silikonpolymere (ein- bzw. zweikomponentig), silanmodifizierte Polymere, wie sie beispielsweise bei G. Habenicht, "Kleben: Grundlagen, Technologie, Anwendungen", 3. Auflage, 1997 im Kapitel 2.3.4.4 beschrieben werden. Die (Meth)acrylat-funktionellen Reaktionskleber auf der Basis peroxidischer Härter, anaerober Härtungsmechanismen, aerober Härtungsmechanismen oder UV-Härtungsmechanismen eignen sich ebenfalls als Klebstoffmatrix. Konkrete Beispiele für den Einbau thermisch labiler Gruppen in Reaktionsklebstoffe zum Ziel der späteren Spaltung dieser Bindungen sind die Klebstoffe gemäß WO 99/07774, bei denen zumindest eine Aufbaukomponente Di- oder Polysulfidbindungen enthält.

Zusätzlich zu den vorgenannten Bindemittelmatrix-Bestandteilen enthalten die erfindungsgemäßen Klebstoffe thermisch aktivierbare Substanzen, die einen Entklebevorgang auslösen können. Diese thermisch aktivierbaren Substanzen sind bei Raumtemperatur fest und möglichst feinteilig homogen in der Bindemittelmatrix verteilt. Beim Erwärmen sollen diese Stoffe eine Quellung der Bindemittelmatrix bewirken, eine Phasenumwandlung durchlaufen, zersetzt werden und/oder Gase oder Wasserdampf erzeugen. Eine Phasenumwandlung kann dabei das Schmelzen der aktivierbaren Substanz bedeuten, wobei die geschmolzene Substanz erhöhte Migrationsfähigkeit in der Bindemittelmatrix hat und diese entweder aufquillt in der Art eines Weichmachers und damit die mechanische Festigkeit des Bindemittelsystems schwächt oder sogar zum Bindungsbruch von Vernetzungspunkten der Bindemittelmatrix beiträgt. Gas- oder Wasserdampf-bildende Substanzen bewirken durch ihren starken Expansionsdruck ein Lösen der Klebstoffverbindung oder eine erhebliche Schwächung, so daß die der Klebeverbund unter leichter mechanischer Belastung separierbar wird.

Konkrete Beispiele für derartige thermisch aktivierbare Substanzen sind die Diethylmalonsäure, Oxalsäure, Adipinsäure, Zitronensäure, Malonsäure, Glutarsäure, Ascorbinsäure, Benzoesäure, t-Butylbenzoesäure, feste Dialkohole wie z.B. 1,12-Dodecandiol oder Loxanol (12-Hydroxysterylalkohol, Firma Henkel), organische Azoverbindungen, Ammoniumhydrogencarbonat oder thermisch expandierende Mikroholkörper wie beispielsweise Expancel 820 DU (Firma Nobel Industries). Beispiele für wasserdampferzeugende thermisch aktivierbare Substanzen sind anorganische Salze mit mindestens einem Mol Kristallwasser, beispielhaft erwähnt seien Al(NO₃ )₃·9 H₂O, Ca SO₄·5 H₂O, CuSO₄·5 H₂O, Mg(NO₃)₂·6H₂O, NaHSO₄·H₂O, Na₃PO₄·12H₂O sowie Aluminiumoxyidhydrat. Diese thermisch aktivierbaren Substanzen werden in Mengen zwischen 1 und 20 Gew. % in das Bindemittel eindispergiert.

In besonders einfacher Ausführungsform können handelsübliche, vorzugsweise zweikomponentige Klebstoffsysteme hierfür verwendet werden. Dabei wird die thermisch aktivierbare Substanz in die B- bzw. Harz-Komponente der Klebstoffe eingerührt und diese wird dann mit der A- bzw. Härterkomponente verrührt und auf mindestens einer Substratoberfläche der zu verbindenden Substrate aufgebracht und in herkömmlicher Weise ausgehärtet.

Dabei können die thermisch aktivierbaren Substanzen in bevorzugter Form direkt beim Hersteller bereits in die entsprechende Bindemittelkomponente eingearbeitet werden. Grundvoraussetzung hierbei ist, daß die thermisch aktivierbare Substanz die Lagerfähigkeit der Bindemittelkomponente nicht negativ beeinflusst.

Eine andere Möglichkeit besteht darin, die thermisch aktivierbare Substanz erst unmittelbar vor der Applikation des Klebstoffes in die entsprechende Bindemittelkomponente einzurühren, was besonders einfach bei zweikomponentigen Klebstoffen möglich ist.

Nachfolgend soll die Erfindung anhand einiger Prinzipversuche dargestellt werden, wobei die Auswahl der Beispiele keine Beschränkung des Umfanges des Erfindungsgegenstandes darstellen soll, sie zeigen nur in modellhafter Weise die Wirkungsweise der erfindungsgemäßen Klebstoffzusammensetzungen.

### Beispiele:

Für die Durchführung der Beispiele wurden die folgenden handelsüblichen zweikomponentigen Klebstoffe verwendet:
Zweikomponentige Epoxidharz-Klebstoff Metallon FL, Firma Henkel,
zweikomponentiger Methacrylat-Klebstoff: Omnifit 2482, Firma Henkel,
zweikomponentiger Polyurethan-Klebstoff: Macroplast 8109/UK 5400, Firma Henkel.

Die thermisch aktivierbare Substanz wurde dabei in feingepulverter Form in die B- bzw. Harz-Komponente der vorgenannten Klebstoffe eingerührt. Die so erhaltene Komponente wurde dann mit der A- bzw. Härter-Komponente gemäß den Vorschriften des Herstellers verrührt und zur Verklebung von Stahlblech-Probekörpern verwendet. Die Mengenangaben sind Gew.% bezogen auf die gesamte Klebstoffzusammensetzung.

Nach dem vollständigen Aushärten der Verklebung wurde zum einen die Zugscherfestigkeit bei Raumtemperatur (RT) bestimmt. Anschließend wurden die Verklebungen auf unterschiedliche Temperaturen zur thermischen Aktivierung der Spaltsubstanzen erwärmt und danach erneut die Zuscherfestigkeit der Verklebung bestimmt.
Die Zugscherfestigkeit wurde in Anlehnung an die DIN 53283 an den Stahlblechprüfkörpern durchgeführt. Die Festigkeitsangaben sind in MPa.

Aus den Ergebnissen wird deutlich, daß sich die erfindungsgemäßen Klebstoff-Zusammensetzungen zur thermischen Entklebung von Klebeverbunden sehr gut eignen.

Die Ergebnisse sind in der nachfolgenden Tabelle zusammengefasst:

## Patentansprüche

1. Klebstoff-Zusammensetzugen für lösbare Klebeverbindungen, dadurch gekennzeichnet, daß sie bei Raumtemperatur feste, thermisch aktivierbare Substanzen zum Entkleben enthalten.

2. Klebstoff-Zusammensetzung nach Anspruch 1, dadurch gekennzeichnet, daß die thermisch aktivierbaren Substanzen beim Erwärmen eine Quellung der Bindemittelmatrix bewirken, eine Phasenumwandlung durchlaufen, zersetzt werden und/oder Gase oder Wasserdampf erzeugen.

3. Klebstoff-Zusammensetzungen nach Anspruch 2, dadurch gekennzeichnet, daß die thermisch aktivierbaren Substanzen ausgewählt werden aus der Gruppe Diethylmalonsäure, Oxalsäure, Adipinsäure, Citronensäure, Malonsäure, Glutarsäure, Ascorbinsäure, Benzoesäure, t-Butylbenzoesäure, feste Dialkohole, organische Azoverbindungen, Ammoniumhydrogencarbonat.

4. Klebstoff-Zusammensetzungen nach Anspruch 2, dadurch gekennzeichnet, daß die thermisch aktivierbaren Substanzen anorganische Salze mit mindestens 1 Mol Kristallwasser sind.

5. Klebstoff-Zusammensetzung nach mindestens einem der vorhergehenden Ansprüche dadurch gekennzeichnet, daß die Bindemittelkomponenten ein- oder zweikomponentige Epoxy-, (Meth)acrylat- oder Polyurethan-Klebstoffe sind.

6. Verfahren zum Entkleben von Klebeverbindungen gekennzeichnet durch die folgenden wesentlichen Schritte
(a) ggf. Mischen der Klebstoff-Zusammensetzungen nach einem der Ansprüche 1 bis 5
(b) Auftragen des Klebstoffes auf mindestens ein zu fügendes Substratteil
(c) Fügen der zu verbindenden Substrate
(d) Aushärten des Klebstoffs
(e) Erwärmen der verklebten Bindemittelmatrix zum Aktivieren der Spaltsubstanzen nach mindestens einem der Ansprüche 1 bis 4
(f) Trennen der verklebten Substrate, ggf. unter mechanischer Belastung der Klebefuge.

7. Verfahren nach Anspruch 6, dadurch gekennzeichnet, daß die Erwärmung gemäß Schritt (e) auf Temperaturen zwischen 80°C und 250°C insbesondere 120°C bis 180∘C für 1 Sekunde bis 2 Stunden erfolgt.

8. Bauteile, die nach einem Verfahren gemäß Anspruch 6 (a) bis (d) verklebt sind.
